# FASCICULE DE BREVET EUROPEEN

(11) **EP 0 978 580 B1**
(45) Date de publication et mention de la délivrance du brevet: **26.02.2003**
(21) Numéro de dépôt: 99401938.8
(22) Date de dépôt: 29.07.1999
(51) Int. Cl.: D01G 1/04

(54) **Procédé et dispositif de fabrication de fils de matière thermoplastique coupes**
Verfahren und Vorrichtung zum Herstellen von Garn aus themoplastischem geschnittenen Material
Method and apparatus for making yarn from thermoplastic cut material

(30) Priorité: 03.08.1998 FR 9809895
(43) Date de publication de la demande: 09.02.2000
(73) Titulaire: Saint-Gobain Vetrotex France, 73000 Chambéry (FR)
(72) Inventeur: Font, Dominique M., 73190 Saint-Baldoph (FR); Veuillen, Gérard M., 73000 Barberaz (FR)
(74) Mandataire: Muller, René

(56) Documents cités:
- EP-A- 0 411 572
- FR-A- 2 126 663
- FR-A- 2 441 670
- US-A- 4 045 196
- PATENT ABSTRACTS OF JAPAN vol. 5, no. 12 (C-040), 24 janvier 1981 (1981-01-24) & JP 55 140728 A (FUJI FIBER GLASS KK), 4 novembre 1980 (1980-11-04)

## Description

La présente invention est relative à un procédé de fabrication de fils de matière thermoplastique coupés, notamment de fils de verre coupés, dans lequel on coupe les fils de matière thermoplastique dans une zone où au moins une roue enclume et une roue porte-lames, simultanément en rotation, sont en contact.

Bien qu'elle ne soit pas limitée à une telle application, l'invention sera plus particulièrement décrite en référence à la fabrication de fils de verre coupés directement sous filière.

Pour ce type d'application, il est bien connu pour réaliser la coupe des fils de verre en continu d'utiliser un ensemble de coupe constitué de deux roues en contact, l'une dite enclume et l'autre dite porte-lames.

Cet ensemble de coupe doit à la fois :
- tirer plusieurs fils de verre continus issus de filières et ce à une vitesse élevée de l'ordre d'une ou plusieurs dizaines de mètres par seconde ;
- couper chaque fil de verre en tronçons de longueur prédéterminée.

Un problème important rencontré lors de la fabrication précitée est lié au phénomène d'usure relatif des roues en contact, d'autant plus que leur vitesse de rotation et la pression de contact entre elles est élevée. En particulier, il se produit une usure rapide et progressive d'une part du tranchant des lames et d'autre part de la surface périphérique extérieure de la roue enclume faite en élastomère du type polyuréthanne.

Ces usures impliquent que le contact entre les deux roues est de moins en moins adapté à un étirage correct des fils de verre et que la déformation appliquée par chacune des lames sur la surface périphérique extérieure de la roue enclume ne permet plus de rompre de manière nette les fils. De ce fait, la qualité de fils coupés produits se dégrade au fur et à mesure.

Jusqu'à ce jour, on s'affranchit de cette difficulté dans un premier temps en s'autorisant une qualité de fil coupé plus ou moins dégradée, puis, lorsque cette dégradation est excessive, en interrompant la production de manière à procéder à un changement plus ou moins fréquent des roues.

Ce changement nuit bien évidemment au rendement de production.

Le but de l'invention est alors d'améliorer le rendement de production de fils coupés du type mentionné précédemment sans pour autant dégrader la qualité fixée.

Pour ce faire, l'invention a pour objet un procédé de fabrication de fils de matière thermoplastique coupés, notamment de fils de verre coupés, dans lequel on coupe les fils de matière thermoplastique dans une zone où au moins une roue enclume et une roue porte-lames, simultanément en rotation, sont en contact, caractérisé en ce que l'on effectue un usinage d'au moins une partie de la surface périphérique de ladite roue enclume en rotation et au contact de la roue porte-lames, de manière à rattraper son usure.

L'usinage consiste à réduire l'épaisseur de la roue enclume, et de manière avantageuse en meulant la surface périphérique de la roue.

L'usinage direct en production proposé par l'invention est une solution simple et efficace au problème posé. Pour arriver à cette solution, les inventeurs ont su mettre en évidence que le changement des roues mentionné en préambule ne s'imposait avant tout que pour la roue enclume, l'usure du matériau (polyuréthanne) constitutif de sa surface périphérique extérieure étant rédhibitoire tandis que le potentiel du tranchant des lames n'était pas utilisé à son maximum. Ils ont alors écarté la solution qui consistait à formuler un matériau beaucoup plus résistant à l'usure, solution délicate de mise au point et difficile à appliquer en conditions industrielles.

Les avantages procurés par l'invention sont nombreux.

Tout d'abord du fait même de l'usinage direct, la fréquence de changement des roues est considérablement diminuée, d'où une augmentation importante du temps de production. Cette augmentation est par ailleurs d'autant plus importante que la production n'est pas interrompue pendant l'usinage direct.

Ensuite, les coûts liés à la consommation de matériel sont également considérablement réduits. En effet, selon l'état de l'art, le coût en consommable lié à la remise en état fréquente des roues était loin d'être négligeable, notamment par le passage fréquent de la roue enclume sur une machine d'usinage classique tel qu'un tour de mécanicien...

En outre, la qualité de fil coupé obtenue est beaucoup plus constante.

De plus, l'usinage direct permet de s'assurer en permanence, d'une parfaite coaxialité entre la surface périphérique extérieure de la roue enclume et l'axe de rotation qui la supporte, ce qui ne pouvait pas être le cas selon l'état de l'art dans la mesure où, notamment lors du remontage de la roue enclume dont l'usure avait été rattrapée sur une machine d'usinage classique, il subsistait toujours un risque que l'axe de symétrie de cette roue ne soit pas confondu avec l'axe de rotation précité.

Enfin, la régénération en quelque sorte de la surface périphérique extérieure de la roue enclume induit une diminution de l'usure des lames bien moindre car elles ne subissent plus d'abrasion de la part des particules de matière thermoplastique résultant de la coupe qui ne peuvent plus s'incruster dans cette même surface.

Selon une caractéristique avantageuse de l'invention, on étire les fils à l'aide de l'ensemble formé par la roue enclume et la roue porte-lames.

De préférence, préalablement à la coupe, on dispose les fils de matière thermoplastique de telle sorte qu'ils s'appuient sur une partie de la surface périphérique d'une des roues, de préférence de la roue enclume. Un tel agencement participe à l'étirage et l'entraînement par friction des fils sur la roue enclume.

De préférence encore, les fils de matière thermoplastique sont obtenus par un procédé de fibrage direct.

L'invention concerne également un dispositif de mise en oeuvre du procédé qui vient d'être décrit. Ce dispositif est remarquable en ce qu'il comprend :
- au moins une roue enclume et une roue porte-lames en contact;
- des moyens pour effectuer un usinage d'au moins une partie de la surface périphérique extérieure de la roue enclume.

Avantageusement, le dispositif comprend en outre des moyens pour disposer les fils tels qu'ils s'appuient sur une partie de la surface périphérique d'une des roues, de préférence de la roue enclume.

Selon une caractéristique de l'invention, la roue enclume consiste en un cylindre recouvert sur au moins une partie de sa circonférence d'un revêtement en matériau polymère, notamment un élastomère du type polyuréthanne.

Avantageusement, les moyens pour effectuer l'usinage du dispositif précité comprennent au moins une meule abrasive. Bien évidemment, les moyens pour effectuer l'usinage peuvent comprendre un outil coupant tel qu'une lame.

La meule abrasive est cependant parfaitement adaptée à l'usinage conforme à l'invention dans la mesure où il constitue un outil simple et peu encombrant capable de "régénérer", c'est à dire rendre à nouveau uniforme, la surface périphérique extérieure de la roue enclume animée d'une vitesse périphérique élevée.

Selon une caractéristique additionnelle, ladite meule abrasive consiste en un cylindre, de préférence métallique, dont la surface périphérique est recouverte d'une multitude de grains abrasifs, du type diamant. Cette structure particulière de meule permet d'abraser sans risque de glissement entre les surfaces considérées.

Selon une autre caractéristique, les moyens pour effectuer l'usinage comprennent en outre des moyens pour déplacer ladite meule abrasive. Ces moyens doivent notamment permettre à la meule d'usiner toute la surface périphérique simultanément, en effectuant un travail dit en plongée.

Pour optimiser encore l'intervention des moyens d'usinage, la mise en fonctionnement et, le cas échéant, le déplacement des moyens pour effectuer l'usinage est (sont) asservie (s) à des moyens pour contrôler l'état de surface périphérique extérieure de la roue enclume tels qu'un capteur optique, un capteur de mesure de rugosité ou à des moyens pour contrôler la qualité des fils coupés.

Afin d'éviter tout risque de voir les particules résultant de l'usinage venir encrasser les différents éléments environnants et, le cas échéant venir se mélanger au produit fini, il est préférable que le dispositif comprenne en outre des moyens pour les récupérer. Ces particules peuvent être soit des " copeaux " provenant des particules d'élastomère, soit des particules abrasives libérées de la meule abrasive.

Ces moyens de récupération peuvent de manière préférée consister en au moins une buse d'aspiration, de préférence située immédiatement en aval des moyens pour effectuer l'usinage. Par " aval ", il faut comprendre ici, la position relative par rapport au sens de rotation de la roue enclume. En fait, la position de la buse d'aspiration sera avantageusement choisie en fonction de la direction d'éjection principale des particules résultant de l'usinage. Cette direction dépendra bien évidemment du sens de rotation relatif de la meule par rapport à celui de la roue enclume, ainsi que de la valeur de sa vitesse relative.

Comme mentionné précédemment, l'invention est particulièrement applicable à la fabrication de fils de verre coupés directement sous filière, notamment ceux de diamètre filamentaire compris entre 5 et 24 µm et/ou ceux de longueur comprise entre 1,5 et 15 mm.

D'autres détails et caractéristiques avantageuses ressortiront à la lecture de la description détaillée d'un exemple illustratif mais non limitatif faite en référence aux figures qui représentent :
- figure 1 : une représentation schématique d'une installation de fabrication de fils de verre coupés directement sous filière comprenant un dispositif conforme à l'invention;
- figure 2 : une représentation schématique d'un dispositif conforme à l'invention.

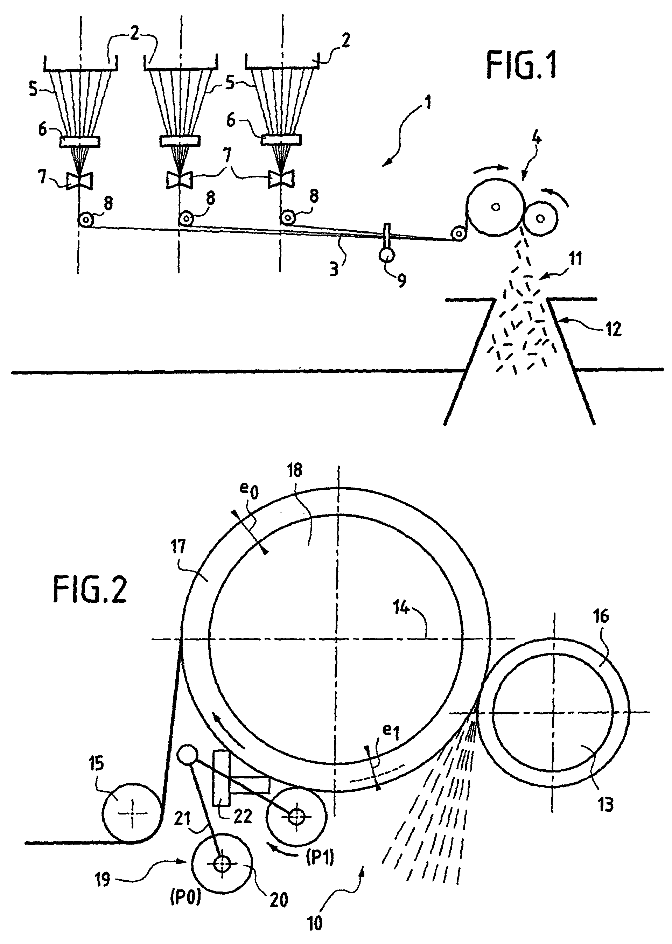

La figure 1 est une représentation schématique d'une installation de fabrication de fils de verre coupés directement sous filière.

Cette installation 1 comprend une série de filières 2 desquelles sont étirés en continu des fils de verre 3 et un ensemble de coupe 4 disposée en aval de l'installation, par référence à la direction d'étirage des fils.

Chaque filière 2 alimentée en verre fondu par un dispositif d'alimentation non représenté, est munie dans sa partie inférieure d'une multiplicité d'orifices à partir desquels des filaments 5 en grand nombre sont rassemblés sous la forme de nappes. Ces filaments sont alors revêtus d'ensimage, de manière connue en soi, par l'intermédiaire d'un dispositif d'enduction 6 et enfin rassemblés sous la forme de fils 3 à l'aide de roulettes d'assemblage 7. Les fils 3 ainsi formés sont amenés, après passage sur des roulettes de renvoi 8, à un dispositif de guidage 9 et introduits dans une machine de coupe 10 conforme à l'invention détaillée ci-après. Les fils coupés 11 sont récupérés par un dispositif de réception 12.

La figure 2 est une représentation schématique de la machine de coupe 10 conforme à l'invention. Cette machine de coupe 10 comprend tout d'abord une roue porte-lames 13 et une roue enclume 14 et une roulette d'entrée 15 qui permet notamment aux fils 3 de s'appuyer sur la surface périphérique de la roue enclume 14 sur une grande longueur et donc d'être étirés et entraînés par friction. La roue porte-lames 13 est munie à sa périphérie de lames non représentées. La roue enclume 14 est quant à elle revêtue d'un bandage en élastomère 17 d'épaisseur e₀ moulée sur un mandrin métallique 18. Les roues 13 et 14 en rotation sont au contact l'une de l'autre, de telle sorte que la zone de contact est aussi la zone de coupe. Cette machine de coupe 10 comprend, conformément à l'invention, dans sa partie inférieure un dispositif abrasif 19 dans une zone où il ne risque pas de venir perturber la coupe des fils 3. Ce dispositif abrasif 19 est susceptible d'effectuer un usinage de la surface extérieure du bandage en élastomère 17 de la roue enclume 14 de manière à lisser la surface en réduisant son épaisseur. Ce dispositif comprend une meule abrasive 20 sous la forme d'un cylindre métallique dont la surface périphérique est recouverte d'une multitude de grains abrasifs en diamant, placée en partie terminale d'un bras de levier 21 dont le déplacement permet à ladite meule de venir au contact du bandage en élastomère 17 précité. Il comprend également une buse d'aspiration 22 placée immédiatement à proximité du bandage 17.

Le fonctionnement de la machine de coupe 10 conforme à l'invention va maintenant être expliqué. On précise tout de suite qu'on ne décrit pas la manière dont la coupe est réalisée mais plutôt le mode d'action du dispositif abrasif 19.
En aval du dispositif de réception 12 sont placés des moyens permettant d'assurer le contrôle et le suivi de la densité des fils coupés 11 en fonction du temps. La diminution de la densité est directement reliée à la dégradation de l'état de surface du bandage en élastomère 17 précité. Lorsque la densité devient inférieure à un seuil minimal prédéterminé, la mise en fonctionnement de la meule abrasive 20 est déclenchée ainsi que la rotation du bras de levier 21 de telle sorte que la meule passe de sa position initiale P₀ écartée du bandage en élastomère 17 à sa position finale Pi qui la met en contact avec ledit bandage et lui permette d'effectuer une abrasion en plongée.

Ce contact dure pendant un laps de temps prédéfini, suffisant pour enlever sur la périphérie du bandage 17 une quantité d'élastomère telle que l'état de surface de celui-ci redevienne à nouveau uniforme, son épaisseur passant de e₀ à e₁.

Il va de soi que de nombreuses modifications peuvent être apportées sans pour autant sortir du cadre de l'invention.

## Revendications

1. Procédé de fabrication de fils de matière thermoplastique coupés, notamment de fils de verre coupés, dans lequel on coupe les fils de matière thermoplastique dans une zone où au moins une roue enclume (14) et une roue porte-lames (13), simultanément en rotation, sont en contact, **caractérisé en ce que** l'on effectue un usinage d'au moins une partie de la surface périphérique de ladite roue enclume en rotation et au contact de la roue porte-lames, de manière à rattraper son usure.

2. Procédé selon la revendication 1, **caractérisé en ce que** l'usinage consiste à réduire l'épaisseur de la roue enclume.

3. Procédé selon la revendication 2, **caractérisé en ce que** l'usinage consiste à meuler la surface de la roue enclume.

4. Procédé selon la revendication 1, **caractérisé en ce qu'**en outre, on étire les fils à l'aide de l'ensemble formé par la roue enclume et la roue porte-lames.

5. Procédé selon la revendication 1, **caractérisé en ce que** préalablement à la coupe, on dispose les fils de matière thermoplastique de telle sorte qu'ils s'appuient sur une partie de la surface périphérique d'une des roues, de préférence de la roue enclume.

6. Procédé selon l'une des revendications 1 à 5, **caractérisé en ce que** les fils de matière thermoplastique sont des fils obtenus par un procédé de fibrage direct.

7. Dispositif de mise en oeuvre du procédé selon l'une quelconque des revendications 1 à 6, **caractérisé en ce qu'**il comprend :
- au moins une roue enclume (14) et une roue porte-lames (13) en contact ;
- des moyens pour effectuer un usinage d'au moins une partie de la surface périphérique extérieure de la roue enclume.

8. Dispositif selon la revendication 7, **caractérisé en ce qu'**il comprend en outre des moyens pour disposer des fils tels qu'ils s'appuient sur une partie de la surface périphérique d'une des roues, de préférence de la roue enclume.

9. Dispositif selon la revendication 7 ou 8, **caractérisé en ce que** la roue enclume consiste en un cylindre recouvert sur au moins une partie de sa circonférence d'un revêtement en matériau polymère, notamment un élastomère du type polyuréthanne.

10. Dispositif selon l'une des revendications 7 à 9, **caractérisé en ce que** les moyens pour effectuer l'usinage comprennent au moins une meule abrasive.

11. Dispositif selon la revendication 10, **caractérisé en ce que** ladite meule abrasive consiste en un cylindre, de préférence métallique, dont la surface périphérique est recouverte d'une multitude de grains abrasifs, du type diamant.

12. Dispositif selon la revendication 10 ou 11, **caractérisé en ce que** les moyens pour effectuer l'usinage comprennent en outre des moyens pour déplacer ladite meule abrasive.

13. Dispositif selon l'une quelconque des revendications 7 à 12, **caractérisé en ce que** la mise en fonctionnement et, le cas échéant, le déplacement des moyens pour effectuer l'usinage est (sont) asservie (s) à des moyens pour contrôler l'état de surface périphérique extérieure de la roue enclume tels qu'un capteur optique, un capteur de mesure de rugosité ou à des moyens pour contrôler la qualité des fils coupés.

14. Dispositif selon l'une des revendications 7 à 13, **caractérisé en ce qu'**il comprend en outre des moyens pour récupérer les particules résultant de l'usinage.

15. Dispositif selon la revendication 14, **caractérisé en ce que** les moyens de récupération consistent en au moins une buse d'aspiration, de préférence située immédiatement en aval des moyens pour effectuer l'usinage.

16. Application du procédé selon l'une quelconque des revendications 1 à 6 ou du dispositif selon l'une quelconque des revendications 7 à 15 à la fabrication de fils de verre coupés directement sous filière, notamment ceux de diamètre filamentaire compris entre 5 et 24 µm et/ou ceux de longueur comprise entre 1,5 et 15 mm.

## Patentansprüche

1. Verfahren zur Herstellung von Kurzfäden aus einem Thermoplast, insbesondere von Kurzfäden aus Glas, in welchem die Thermoplastfäden in einer Zone zerschnitten werden, in welcher sich wenigstens ein Ambossrad (14) und ein Schneidrad (13), die sich gleichzeitig drehen, miteinander in Berührung befinden, **dadurch gekennzeichnet, dass** mindestens ein Teil der Umfangsfläche des Ambossrades, das sich dreht und mit dem Schneidrad in Berührung befindet, derart maschinell bearbeitet wird, dass sein Verschleiß beseitigt wird.

2. Verfahren nach Anspruch 1, **dadurch gekennzeichnet, dass** die maschinelle Bearbeitung darin besteht, die Dicke des Ambossrades zu verringern.

3. Verfahren nach Anspruch 2, **dadurch gekennzeichnet, dass** die maschinelle Bearbeitung darin besteht, die Oberfläche des Ambossrades zu beschleifen.

4. Verfahren nach Anspruch 1, **dadurch gekennzeichnet, dass** die Fäden außerdem mittels der von Ambossrad und Schneidrad gebildeten Einheit gezogen werden.

5. Verfahren nach Anspruch 1, **dadurch gekennzeichnet, dass** die Thermoplastfäden vor dem Zerschneiden derart angeordnet werden, dass sie auf einem Teil der Umfangsfläche eines der Räder und vorzugsweise des Ambossrades aufliegen.

6. Verfahren nach einem der Ansprüche 1 bis 5, **dadurch gekennzeichnet, dass** die Thermoplastfäden Fäden sind, die durch ein direktes Spinnverfahren erhalten worden sind.

7. Vorrichtung zur Durchführung des Verfahrens nach einem der Ansprüche 1 bis 6, **dadurch gekennzeichnet, dass** sie
- mindestens ein Ambossrad (14) und ein Schneidrad (13), die sich miteinander in Berührung befinden, und
- Mittel zur maschinellen Bearbeitung mindestens eines Teils der äußeren Umfangsfläche des Ambossrades
umfasst.

8. Vorrichtung nach Anspruch 7, **dadurch gekennzeichnet, dass** sie außerdem Mittel zum derartigen Anordnen der Fäden, dass diese auf einem Teil der Umfangsfläche eines der Räder, vorzugsweise des Ambossrades, aufliegen, umfasst.

9. Vorrichtung nach Anspruch 7 oder 8, **dadurch gekennzeichnet, dass** das Ambossrad aus einem Zylinder besteht, der auf mindestens einem Teil seines Umfangs mit einer Beschichtung aus einem polymeren Material, insbesondere einem Elastomer vom Typ Polyurethan, überzogen ist.

10. Vorrichtung nach einem der Ansprüche 7 bis 9, **dadurch gekennzeichnet, dass** die Mittel zur maschinellen Bearbeitung mindestens einen Schleifkörper umfassen.

11. Vorrichtung nach Anspruch 10, **dadurch gekennzeichnet, dass** der Schleifkörper aus einem vorzugsweise metallischen Zylinder besteht, dessen Umfangsfläche mit einer Vielzahl von Schleifkörnchen aus Typ Diamant beschichtet ist.

12. Vorrichtung nach Anspruch 10 oder 11, **dadurch gekennzeichnet, dass** die Mittel zur maschinellen Bearbeitung außerdem Mittel zum Verschieben des Schleifkörpers umfassen.

13. Vorrichtung nach einem der Ansprüche 7 bis 12, **dadurch gekennzeichnet, dass** Tätigkeit und gegebenenfalls Verschiebung der maschinellen Bearbeitungsmittel von Mitteln zur Kontrolle des Zustands der äußeren Umfangsfläche des Ambossrades wie einem optischen Sensor, einem Sensor zur Messung der Rauhtiefe oder Mitteln zur Qualitätskontrolle der Kurzfäden gesteuert wird/werden.

14. Vorrichtung nach einem der Ansprüche 7 bis 13, **dadurch gekennzeichnet, dass** sie außerdem Mittel zur Rückgewinnung der bei der maschinellen Bearbeitung entstehenden Teilchen umfasst.

15. Vorrichtung nach Anspruch 14, **dadurch gekennzeichnet, dass** die Rückgewinnungsmittel aus mindestens einer Ansaugdüse bestehen, die sich vorzugsweise unmittelbar nach den maschinellen Bearbeitungsmitteln befindet.

16. Anwendung des Verfahrens nach einem der Ansprüche 1 bis 6 oder der Vorrichtung nach einem der Ansprüche 7 bis 15 auf die Herstellung von Kurzglasfäden direkt unter der Spinndüse, insbesondere von solchen mit einem Filamentdurchmesser von 5 bis 24 µm und/oder einer Länge von 1,5 bis 15 mm.

## Claims

1. Method of producing cut fibres of thermoplastic material, particularly cut glass fibres, in which the fibres of thermoplastic material are cut in a zone where at least one anvil wheel (14) and one blade-holder wheel (13), rotating simultaneously, are in contact, **characterised in that** machining is carried out on at least a part of the peripheral surface of the said anvil wheel which is in rotation and in contact with the blade-holder wheel, in such a way as to compensate for its wear.

2. Method as claimed in Claim 1, **characterised in that** the machining consists of reducing the thickness of the anvil wheel.

3. Method as claimed in Claim 2, **characterised in that** the machining consists of grinding the surface of the anvil wheel.

4. Method as claimed in Claim 1, **characterised in that** in addition the fibres are drawn with the aid of the assembly formed by the anvil wheel and the blade-holder wheel.

5. Method as claimed in Claim 1, **characterised in that** prior to the cutting the fibres of thermoplastic material are disposed in such a way that they rest on a part of the peripheral surface of one of the wheels, preferably the anvil wheel.

6. Method as claimed in one of Claims 1 to 5, **characterised in that** the fibres of thermoplastic material are fibres obtained by a direct fibre-drawing process.

7. Apparatus for carrying out the method as claimed in any one of Claims 1 to 6, **characterised in that** it comprises:
- at least one anvil wheel (14) and one blade-holder wheel (13) in contact;
- means for carrying out machining of at least a part of the external peripheral surface of the anvil wheel.

8. Apparatus as claimed in Claim 7, **characterised in that** it also comprises means for disposing fibres so that they rest on a part of the peripheral surface of one of the wheels, preferably the anvil wheel.

9. Apparatus as claimed in Claim 7 or 8, **characterised in that** the anvil wheel consists of a cylinder covered over at least a part of its circumference with a coating of polymer material, particularly an elastomer of the polyurethane type.

10. Apparatus as claimed in one of Claims 7 to 9, **characterised in that** the means for carrying out the machining comprise at least one abrasive grinder.

11. Apparatus as claimed in Claim 10, **characterised in that** the said abrasive grinder consists of a cylinder, preferably metallic, the peripheral surface of which is covered with a multiplicity of abrasive grains of the diamond type.

12. Apparatus as claimed in Claim 10 or 11, **characterised in that** the means for carrying out the machining also comprise means for moving the said abrasive grinder.

13. Apparatus as claimed in any one of Claims 7 to 12, **characterised in that** the means for carrying out the machining are put into operation and, if appropriate, displaced under the control of means for monitoring the state of the external peripheral surface of the anvil wheel such as an optical sensor, a roughness measurement sensor or means for monitoring the quality of the cut fibres.

14. Apparatus as claimed in one of Claims 7 to 13, **characterised in that** it also comprises means for recovering the particles resulting from the machining.

15. Apparatus as claimed in Claim 14, **characterised in that** the recovery means consist of at least one suction nozzle, preferably situated immediately downstream of the means for carrying out the machining.

16. Application of the method as claimed in any one of Claims 1 to 6 or of the apparatus as claimed in any one of Claims 7 to 15 to the production of glass fibres cut directly below a die, particularly those with a filament diameter between 5 and 24 µm and/or those with a length between 1.5 and 15 mm.
